Europäisches Patentamt

European Patent Office

Office européen des brevets

(19)

(11) Veröffentlichungsnummer: **0 193 718**
**A1**

(12) # EUROPÄISCHE PATENTANMELDUNG

(21) Anmeldenummer: **86100641.9**

(51) Int. Cl.⁴: **G 01 N 21/35**, G 01 J 3/08

(22) Anmeldetag: **18.01.86**

(30) Priorität: **07.02.85 DE 3504140**

(71) Anmelder: **Hartmann & Braun Aktiengesellschaft, Gräfstrasse 97, D-6000 Frankfurt am Main 90 (DE)**

(43) Veröffentlichungstag der Anmeldung: **10.09.86 Patentblatt 86/37**

(72) Erfinder: **Fabinski, Walter, An der Landwehr 70, D-6239 Kriftel (DE)**
Erfinder: **Apel, Willi, Schalkwiesenweg 9, D-6000 Frankfurt (Main) (DE)**

(84) Benannte Vertragsstaaten: **DE FR GB IT NL SE**

(54) **Rotierende Modulationseinrichtung.**

(57) Bei einer rotierenden Modulationseinrichtung für Fotometer sind zur Erzielung eines Abgleichs der Phasen von Meßstrahl und Vergleichsstrahl eine Scheibe mit Öffnungen und ein Konstruktionsteil mit korrespondierenden Öffnungen vorgesehen, wobei Scheibe und Konstruktionsteil relativ zueinander tangential verstellbar sind.

Fig.1a
Fig.1b
Fig.1c
Fig.1d

EP 0 193 718 A1

ACTORUM AG

Hartmann & Braun
Aktiengesellschaft

6000 Frankfurt (Main), 05.02.1985
Gräfstraße 97          Mk/lw

0193718

1

## Rotierende Modulationseinrichtung

Die Erfindung betrifft eine rotierende Modulationseinrichtung zur periodischen Unterbrechung des Meßstrahles und des davon räumlich getrennten Vergleichsstrahles eines Infrarot-Gasanalysators, mit segmentförmigen Öffnungen für die zwei Lichtstrahlengänge in zwei unterschiedlichen Abständen vom Drehpunkt der Modulationseinrichtung.

Eine solche Modulationseinrichtung wird von einem Motor angetrieben; sie bewirkt, daß die von einem Strahler ausgehende Strahlung, die sich auf zwei Hälften einer Küvette aufteilt, periodisch unterbrochen wird. Eine derartige Einrichtung ist in der DE PS 13 02 592 beschrieben.

Beim Betrieb einer Reihe von Analysatoren ist es erforderlich, daß beide Strahlengänge, d.h. Meßstrahl und Vergleichsstrahl, zeitlich exakt aufeinander abgestimmt sind, gleichgültig, ob es sich um eine gleichphasige oder um eine gegenphasige Modulation handelt. Beginn und Ende der Strahlung müssen übereinstimmen, wenn es sich um eine gleichphasige Modulation handelt; bei einer gegenphasigen Modulation muß Beginn einer Strahlendauer (Beginn des Meßstrahles) auf das zeitliche Ende des anderen Strahles (Vergleichsstrahles) abgestimmt sein. Ist dies nicht der Fall, stellen sich Nachteile ein; insbesondere ist das

- 2 -

Nullpunktsignal zu hoch, was zur Folge hat, daß die Empfindlichkeit des mit einer solchen Modulationseinrichtung ausgestatteten Fotometers herabgesetzt ist.

Bei der gemäß der Erfindung ausgebildeten Modulationseinrichtung treten diese Nachteile nicht auf. Die Erfindung besteht darin, daß bei der Modulationseinrichtung mit den Merkmalen des Oberbegriffes des Hauptanspruches eine Scheibe vorgesehen ist mit mindestens einer segmentförmigen Öffnung, die den Meßstrahlengang freigibt und mindestens einer segmentförmigen Öffnung, die den Vergleichsstrahlengang freigibt, sowie ein mit der Scheibe verbundener Konstruktionsteil, der so ausgebildet und angeordnet ist, daß seine tangentiale Verstellung relativ zu der Scheibe eine Verschiebung der segmentförmigen Öffnungen gegeneinander bewirkt.

Soll bei der Modulationseinrichtung gemäß der Erfindung gleichphasig moduliert werden, so wird man die Scheibe so ausbilden, daß die radial versetzten Öffnungen für den Meßstrahl und den Vergleichsstrahl in tangentialer Richtung gegeneinander nicht versetzt sind.

Zur Erzielung einer gegenphasigen Modulation werden die radial versetzten Öffnungen für den Meßstrahl und den Vergleichsstrahl auch in tangentialer Richtung gegeneinander versetzt.

In beiden Modulationsverfahren ist gemäß der Erfindung gewährleistet, daß der durch die Öffnungen freigegebene Meßstrahl bzw. Vergleichsstrahl zeitlich exakt definiert ist. Durch Verdrehen des Konstruktionsteiles relativ zu der Scheibe werden Anfangspunkt und Endpunkt eines Strahles gegenüber dem anderen Strahl gleichförmig in der einen oder anderen Richtung verschoben; es wird ein Phasenabgleich herbeigeführt.

Die Erfindung ist anwendbar bei Modulationseinrichtungen, bei denen während einer Umdrehung Meßstrahl und Vergleichsstrahl einmal - gleichphasig oder gegenphasig - freigegeben werden.

Die Erfindung ist mit Vorteil auch anwendbar, wenn Meßstrahl und Vergleichsstrahl während einer Umdrehung der Modulationseinrichtung zweimal freigegeben werden. Hierbei sind die Öffnungen für beide Teilstrahlen um 90° gegeneinander versetzt.

Es ist auch denkbar, die Erfindung dann anzuwenden, wenn die Anzahl der Modulationen während einer Umdrehung der Modulationseinrichtung höher als 2 ist.

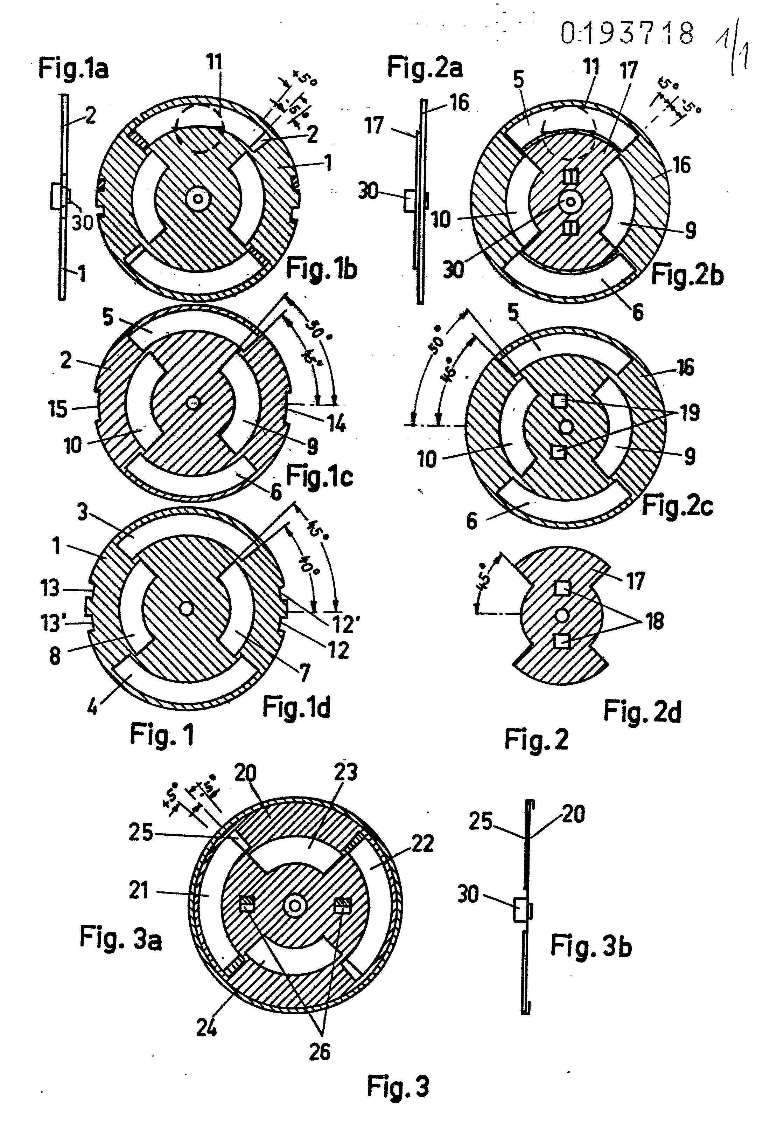

Ausführungsbeispiele gemäß der Erfindung werden an Hand der Zeichnung näher erläutert, in der die Figuren 1, 2 und 3 drei verschiedene Ausführungsformen der erfindungsgemäß ausgebildeten Modulationseinrichtung darstellen.

In Figur 1 zeigt Figur 1a die Seitenansicht der Modulationseinrichtung, die aus zwei Scheiben 1 und 2 gleichen Durchmessers besteht, die kraftschlüssig miteinander verbunden um die Nabe 30 rotieren.
Figur 1b zeigt die aus den zwei Scheiben 1 und 2 bestehende Modulationseinrichtung zur gegenphasigen Modulation von vorne. Die Scheibe 1 weist auf einem äußeren Radius die segmentförmigen Öffnungen 3 und 4 auf, denen die segmentförmigen Öffnungen 5 und 6 der Scheibe 2 entsprechen. Um 90° versetzt hierzu hat die Scheibe 1 Öffnungen 7 und 8 auf einem inneren Radius, denen die Öffnungen 9 und 10 der Scheibe 2 entsprechen. Wie die Winkelangaben erkennen lassen, sind die Öffnungen 3 und 4 der Scheibe 1 etwas länger als die Öffnungen 5 und 6 der Scheibe 2; ebenfalls sind die Öffnungen 9 und 10 der Scheibe 2 etwas länger als die inneren Öffnungen 7 und 8 der Scheibe 1. Durch die Öffnungspaare 3/5 und 4/6 werden die in den oberen Teil der Küvette 11 eindringenden Infrarot-Lichtstrahlen (Meßstrahl) moduliert; durch die inneren Öffnungspaare 8/10 und 9/11 werden die in den unteren Teil der Küvette eintretenden Infrarot-Lichtstrahlen (Vergleichsstrahl) moduliert.

Die Scheibe 1 ist an diametralen Umfangsstellen mit den zweigeteilten Ausnehmungen 12 und 12' sowie 13 und 13' versehen; die Scheibe 2 weist diametral zueinander liegend die Ausnehmungen 14 und 15 auf. Nach dem Zusammensetzen der zwei Scheiben 1 und 2 stehen sich die Ausnehmungen beider Scheiben 1 und 2 derart gegenüber, daß Überlappungen entstehen. Mit Hilfe eines Schraubendrehers kann leicht die Scheibe 1 gegenüber der Scheibe 2 verdreht werden, derart, daß die verschieden lang ausgebildeten Ausnehmungen relativ zueinander verschoben werden können. Dadurch werden zeitlich Beginn und Ende des Analysenstrahls in Relation zu dem Vergleichsstrahl in bestimmter Weise festgelegt.

Die Modulationseinrichtung nach Figur 2 dient ebenfalls der gegenphasigen Modulation. Figur 2a zeigt die Modulationseinrichtung von der Seite. Figur 2b läßt die montierte Modulationseinrichtung von vorne erkennen. Figur 2c und 2d zeigen die Scheibe und den Konstruktionsteil für sich.

Die Scheibe 16 hat ähnlich wie die Scheibe 2 nach Figur 1 radial wie tangential versetzte Öffnungen 5/6, 9/10; mit der Scheibe 16 rotiert um die Nabe 30 synchron ein nierenförmiger Konstruktionsteil 17, dessen Durchmesser kleiner ist als der innere Durchmesser der äußeren Öffnungen 5 und 6. Durch Verstellung des Konstruktionsteiles 17 wird die Lage der Öffnungen 9 und 10 relativ zu den äußeren Öffnungen 5 und 6 geändert. Hierzu sind die freien Stellen des nierenförmigen Konstruktionsteiles 17 in Umfangsrichtung kleiner (90°) als die Länge der inneren Öffnungen 9 und 10 (100°). Um eine Verstellung des Konstruktionsteiles 17 relativ zu der Scheibe 16 zu ermöglichen, ist der Konstruktionsteil mit den Ausnehmungen 18 versehen und die Scheibe 16 mit den Ausnehmungen 19. Die Ausnehmungen 18 und 19 sind versetzt zueinander angeordnet, derart, daß sie sich überlappen, wie in Figur 2b ersichtlich. Mit Hilfe eines Schraubendrehers können beide Teile gegeneinander in der einen oder anderen Richtung verdreht werden. Wie in Figur 2b angedeutet, beträgt der Verdrehungswinkel ±5°.

Auch bei der Modulationseinrichtung nach Figur 3 ist eine Scheibe 20 - wie Figur 3a zeigt - mit zwei äußeren segmentförmigen Öffnungen 21 und 22 und mit zwei inneren Öffnungen 23 und 24 vorgesehen. Es ist weiterhin ein Konstruktionsteil 25 in Form einer Scheibe vorgesehen mit Öffnungen, die den Öffnungen 21/22 und 23/24 der Scheibe 20 entsprechen. Die Ausnehmungen 26 ermöglichen eine Verstellung des Konstruktionsteiles 25 gegenüber der Scheibe 20 in beiden Richtungen, ähnlich wie in der Modulationseinrichtung gemäß Figur 2.

Patentansprüche

1. Rotierende Modulationseinrichtung zur periodischen Unterbrechung des Meßstrahles und des davon räumlich getrennten Vergleichsstrahles eines Infrarot-Gasanalysators, mit segmentförmigen Öffnungen für die zwei Lichtstrahlengänge in zwei unterschiedlichen Abständen vom Drehpunkt der Modulationseinrichtung, dadurch gekennzeichnet, daß eine Scheibe (2, 16, 20) vorgesehen ist mit mindestens einer segmentförmigen Öffnung (5, 21), die den Meßstrahlengang freigibt und mindestens einer segmentförmigen Öffnung (9, 23), die den Vergleichsstrahlengang freigibt, sowie ein mit der Scheibe (2, 16, 20) verbundener Konstruktionsteil (1, 17, 25), der so ausgebildet und angeordnet ist, daß seine tangentiale Verstellung relativ zu der Scheibe (2, 16, 20) eine Verschiebung der segmentförmigen Öffnungen (5/9; 21/23) gegeneinander bewirkt.

2. Einrichtung nach Anspruch 1, dadurch gekennzeichnet, daß zur Erzielung einer gleichphasigen Modulation die radial versetzten segmentförmigen Öffnungen (5/9; 21/23) für den Meßstrahl und den Vergleichsstrahl in tangentialer Richtung nicht gegeneinander versetzt sind.

3. Einrichtung nach Anspruch 1, dadurch gekennzeichnet, daß zur Erzielung einer gegenphasigen Modulation die radial versetzten Öffnungen (5/9; 21/23) für den Meßstrahl und den Vergleichsstrahl auch in tangentialer Richtung gegeneinander versetzt sind.

4. Einrichtung nach Anspruch 3, dadurch gekennzeichnet, daß die Scheibe (2, 16, 20) mit zwei gegenüberliegenden Öffnungen (5/6 Figur 1 und 21/22 Figur 3) für den Vergleichsstrahl und zwei gegenüberliegenden Öffnungen (9/10 Figur 1 und 2; 23/24 Figur 3) für den Meßstrahl versehen ist, wobei die Öffnungspaare (5/9; 21/23) in tangentialer Richtung um 90° versetzt sind.

0193718

5. Einrichtung nach Anspruch 1 oder folgenden, dadurch gekennzeichnet, daß die Scheibe (2, 16, 20) und der Konstruktionsteil (1, 17, 25) mit sich teilweise (12, 12'/14 in Figur 1; 18/19 in Figur 2) überlappenden Ausnehmungen versehen sind, die der Verstellung des Konstruktionsteiles (1, 17, 25) relativ zur Scheibe (2, 16, 20) dienen.

6. Einrichtung nach Anspruch 5, gekennzeichnet durch ein Konstruktionsteil in Form einer Scheibe (1), die segmentförmige Öffnungen (3/4; 7/8) hat wie die Scheibe (2), die sich jedoch in ihrer Länge von den segmentförmigen Öffnungen (5/6; 9/10) der Scheibe (2) unterscheiden und die Ausnehmungen (12/12', 13/13' und 14/15) am Umfang der Scheibe (2) und des Konstruktionsteiles (1) angebracht sind.

7. Einrichtung nach Anspruch 5, dadurch gekennzeichnet, daß die Ausnehmungen (19) in der Scheibe (16) und (18) im Konstruktionsteil (17) oberhalb und unterhalb des gemeinsamen Drehpunktes (Nabe 30) angebracht sind.

8. Einrichtung nach Anspruch 6, dadurch gekennzeichnet, daß der Konstruktionsteil (Figur 2, Pos. 17) einen Radius hat, der kleiner ist als der innere Radius der äußeren segmentförmigen Öffnung (5, 6) und mindestens eine Aussparung, die in Umfangsrichtung kürzer ist als die innere segmentförmige Öffnung (9, 10) der Scheibe (16).

Fig.1a Fig.1b Fig.1c Fig.1d Fig. 1

Fig.2a Fig.2b Fig.2c Fig. 2d Fig. 2

Fig. 3a Fig. 3b Fig. 3

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-2 608 912 (H. MAIHAK AG) * ganze Schrift * | 1,3,4 | G 01 N 21/35<br>G 01 J 3/08 |
| A | DE-B-2 614 181 (LEYBOLD-HERAEUS GMBH) * Spalte 3, Zeile 34 - Spalte 4, Zeile 29, Abbildung 6 * | 1 | |
| A | DE-A-2 741 129 (HARTMANN & BRAUN AG) * Anspruch 1, Seite 4, Zeilen 5-15; Seite 5, Zeilen 11-20 * | 1 | |
| A | US-A-4 370 553 (R.A. WAYCASTER et al.) * Abbildung 20; Spalte 4, Zeilen 6-21; Spalte 9, Zeile 66 - Spalte 10, Zeile 25 * | 1 | |
| A | US-A-4 420 687 (M.S. MARTINEZ et al.) * Abbildung 2; Spalte 1, Zeile 55 - Spalte 2, Zeile 10 * | 1 | RECHERCHIERTE SACHGEBIETE (Int. Cl.4)<br><br>G 01 N 21/00<br>G 01 J 3/00<br>G 01 J 5/00 |
| A,D | DE-B-1 302 592 (O.N.E.R.A.) * ganze Schrift * | 1 | |

Der vorliegende Recherchenbericht wurde für alle Patentansprüche erstellt.

| Recherchenort | Abschlußdatum der Recherche | Prüfer |
|---|---|---|
| BERLIN | 06-05-1986 | BRISON O.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82